# EUROPEAN PATENT APPLICATION

(11) **EP 1 460 048 A1**
(43) Date of publication of application: **22.09.2004**
(21) Application number: 02793375.3
(22) Date of filing: 25.12.2002
(51) Int. Cl.: C04B 35/58, B64G 1/58, B64G 1/14

(54) **HEAT−RESISTANT MATERIAL AND HOT STRUCTURE MEMBER BOTH FOR SPACE SHUTTLE, SPACE SHUTTLE, AND METHOD FOR PRODUCING HEAT−RESISTANT MATERIAL FOR SPACE SHUTTLE**

(30) Priority: 26.12.2001 JP 2001392961
(71) Applicant: Mitsubishi Heavy Industries, Ltd., Tokyo 100-8315 (JP)
(72) Inventor: OGURI, Kazuyuki Mitsubishi Heavy Industries, Ltd., Nagoya-shi, Aichi 455-8515 (JP); SEKIGAWA, Takahiro Mitsubishi Heavy Industries,Ltd, Nagoya-shi, Aichi 455-8515 (JP)
(74) Representative: Henkel, Feiler & Hänzel
(86) International application number: PCT/JP2002/013503
(87) International publication number: WO 2003/055825

(57) **Abstract**

An inexpensive high temperature oxidation resistant material for spacecraft, having a higher heat resistance than a conventional oxidation resistant material of a silicon carbide coating system, which may be readily formed into a desired shape, a hot structure part including the oxidation resistant material for spacecraft, a spacecraft provided with the hot structure part, and a method for producing the oxidation resistant material for spacecraft are provided. The oxidation resistant material for spacecraft includes a ceramic material in which silicon carbide is included in zirconium boride. The method for producing the oxidation resistant material for spacecraft includes the steps of including SiC in zirconium boride, and molding by means of a normal pressure sintering method.

## Description

### BACKGROUND OF THE INVENTION

### Technical Field

The present invention relates to a high temperature oxidation resistant material which may be suitably used in a body structure of a spacecraft, such as a space shuttle, a hot structure part using the high temperature oxidation resistant material for spacecraft, and a spacecraft using the hot structure part.

This application is based on Japanese Laid-Open Patent Application No. 2001-392961, the contents of which are incorporated herein by reference.

### Background Art

The temperature at the nose cone and wing leading edge of a spacecraft, such as a space shuttle, reaches 1,700°C, for example, during reentry when returning to the earth due to aerodynamic heating by shock wave. This heated state may continue for twenty minutes, for example, and hence an oxidation resistant material having superior oxidation resistance and thermal barrier properties under ultra high temperatures and hypersonic flow environments is adopted as a material for forming the airframe of the spacecraft in order to protect the internal structure of the body from the ultra high temperature environment.

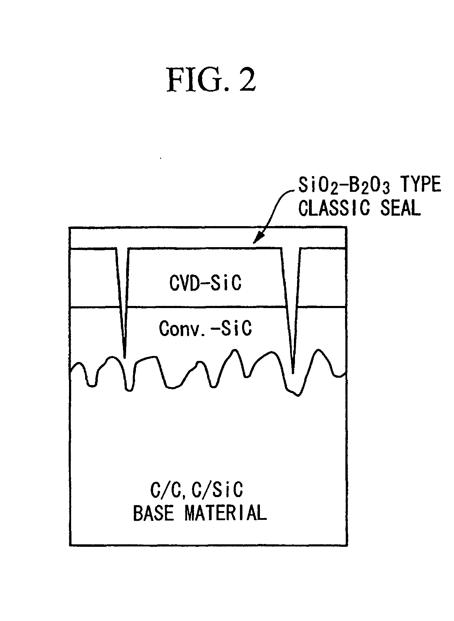

As a conventional oxidation resistant material of this kind, one including a composite material of C/C, C/SiC, etc., as a base, the surface of which has applied therein an oxidation resistant coating so as to have an anti-oxidizing property as shown in FIG. 2, for instance, has been used. Recently, however, a case was reported in the United States in which a boride type ceramic material having an excellent anti-oxidizing property is directly used as a hot structure part (NASA/CR-2001-210856, for example).

On the other hand, a hot structure part using a conventional oxidation resistant material has problems as explained below.

That is, in the silicon carbide type coating system, there is a problem in that the temperature level of about 1,600°C becomes the limit for attaining the anti-oxidizing property due to its material characteristics. The surface temperature of the hot structure part is determined based on such factors as the flight path during reentry and the shape of the part of the spacecraft to which the hot structure part is applied.

That is, in terms of the flight path, the speed of the spacecraft may be quickly reduced as the reentry angle is deepened; however, since the rate of aerodynamic heat applied to the hot structure part increases accordingly, it becomes difficult to attain a heat resistance for each of the hot structure parts. Also, in terms of the outer shape, the temperature of hot structure parts having, especially, a tapered shape, such as a nose cone and a leading edge, tends to become very high and may reach 2,000°C since the aerodynamic heat applied to the body generally increases as the curvature of the shape decreases.

Accordingly, in order to maintain a temperature level of 1,600°C or less in the above-mentioned silicon carbide coating system, it becomes necessary to restrict the flight path and the shape of the body and this leads to problems such as narrowing of the degree of design freedom. Also, it is not possible to increase the oxidation resistant temperature of the silicon carbide coating system to 1,700°C or more due to physical properties of silicon carbide.

On the other hand, although the above-mentioned boride type ceramic material can attain the oxidation resistant property of 2,000°C or higher, it is difficult to produce a three-dimensional body shape, such as that of the above-mentioned nose cone and leading edge, since the ceramic material is conventionally produced only by a hot pressing method.

Accordingly, although the boride type ceramic material has a high oxidation resistant property, it has been difficult to utilize this property for reasons relating to the manufacture thereof.

### Disclosure of Invention

The present invention takes into consideration the above-mentioned circumstances, and it has as an object to provide an inexpensive high temperature oxidation resistant material for spacecraft having a higher heat resistantance than a conventional oxidation resistant material of a silicon carbide coating system and which may be readily formed into a desired shape, a hot structure part including the oxidation resistant material for spacecraft, a spacecraft using the hot structure part, and a method for producing the oxidation resistant material for spacecraft.

The present invention has adopted the following means to solve the above-mentioned problems.

That is, according to the first aspect of the invention, the oxidation resistant material for spacecraft, which is used for a hot structure part for spacecraft such as a space shuttle, includes a ceramic material in which silicon carbide is contained in zirconium boride.

According to the above oxidation resistant material for spacecraft of the first aspect of the invention, a thick oxidation layer having zirconium oxide as a main component is formed on the surface of the oxidation resistant material for spacecraft when aerodynamic heat is applied upon reentry. Since the oxidation layer functions as an anti-oxidation protection layer which reduces the oxidation rate and covers the surface, further oxidation process is inhibited. Also, while only a hot pressing method can be applied to a conventional boride ceramic, a normal pressure sintering method may be adopted in the present invention.

According to the second aspect of the present invention, in a hot structure part used for forming a body structure of a spacecraft such as a space shuttle, the oxidation resistant material for spacecraft as described in the above first aspect is used.

According to the above hot structure of the second aspect of the invention, it becomes possible to provide hot structure parts having a more acute shape than conventional members and a sufficient heat resistance since the oxidation resistant material having a higher heat resistance than that of a conventional silicon carbide coating system is adopted, and it can be formed into a desired shape.

According to the hot structure part of the third aspect of the present invention, the hot structure part as set forth in the second aspect is used for a nose cone of the above spacecraft.

According to the above hot structure part of the third aspect, not only is the heat resistance of the nose cone, which is one of the parts in which the temperature particularly increases during the reentry into the atmosphere increased but also the manufacturing cost thereof may be reduced so that it can be provided at a low price.

According to the hot structure part of the fourth embodiment of the present invention, the hot structure part as set forth in the second aspect is used for a leading edge of the above spacecraft.

According to the above hot structure part of the fourth embodiment, not only is the heat resistance of the nose cone and leading edge, which is one of the parts in which the temperature particularly increases during the reentry into the atmosphere increased, but also the manufacturing cost thereof may be reduced so that it can be provided at a low price.

According to a spacecraft of the fifth embodiment of the present invention, in a spacecraft such as a space shuttle, etc., the hot structure part according to any one of the above-mentioned second to fourth aspects is used.

According to the above spacecraft of the fifth aspect of the invention, since its hot structure parts thereof have a higher heat resistance than that of a conventional member and the hot structure part may be formed into a desired shape, it becomes possible to loosen the restrictions on the shape of the body of the spacecraft due to the materials used.

According to a method for producing an oxidation resistant material for spacecraft of the sixth embodiment of the present invention, the method for producing the oxidation resistant material for spacecraft which is used for a hot structure part for spacecraft such as a space shuttle includes the steps of mixing silicon carbide in zirconium boride, and molding by means of a normal pressure sintering method.

According to the above method for producing an oxidation resistant material for spacecraft of the sixth aspect, a thick oxidation layer having zirconium oxide as a main component is formed on the surface of the oxidation resistant material for spacecraft when aerodynamic heat is applied upon reentry. Since the oxidation layer functions as an anti-oxidation protection layer which reduces the oxidation rate and covers the surface, further oxidation process is inhibited. Also, while only a hot pressing method can be applied to conventional boride ceramic, a normal pressure sintering method may be adopted in the present invention.

### Brief Description of Drawings

FIG. 1 is a diagram showing a perspective view of a spacecraft using a hot structure part including an oxidation resistant material for spacecraft according to an embodiment of the present invention.
FIG. 2 is a diagram showing a cross-sectional view in a thickness direction of an example of a conventional oxidation resistant material for spacecraft.

### Best Mode for Carrying Out the Invention

Hereinafter, embodiments of the oxidation resistant material for spacecraft and the method for producing the oxidation resistant material, the hot structure part, and the spacecraft of the present invention, will be described with reference to the accompanying drawings. However, it is obvious that the present invention is not limited to these embodiments, and various alterations, modifications, and improvements may be made within the spirit and scope of the present invention.

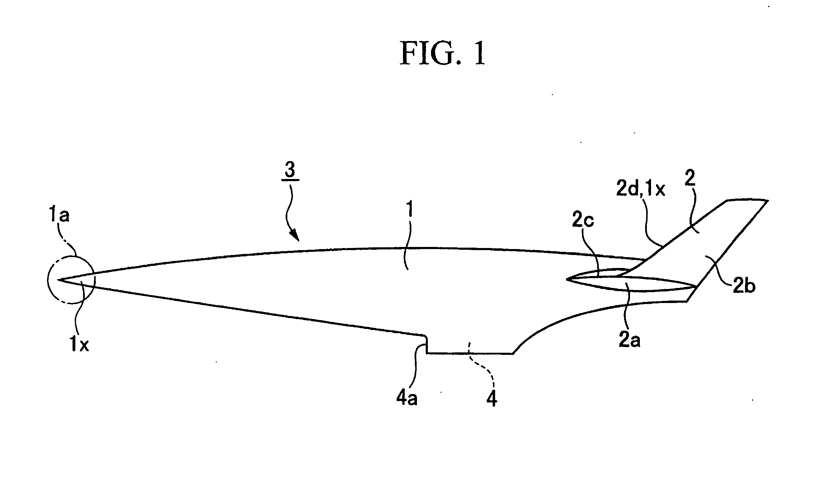

FIG. 1 is a diagram showing a perspective view of a spacecraft using a hot structure part including an oxidation resistant material for spacecraft according to an embodiment of the present invention.

As shown in FIG. 1, the spacecraft according to this embodiment is a reusable type flying craft which travels between the earth and the space, and includes an airframe 3 which mainly comprises a body part 1 and a pair of wings 2.

The body part 1 has a tapered shape decreasing towards the flight direction, i.e., to the left direction in the diagram. A nose cone 1a having a sharp nose radius is disposed at the end of the body part. Also, an engine 4 for generating a driving force is accommodated in the lower surface side of the body part 1. The nose cone 1a is formed of a plurality of hot structure parts 1x, ... which tightly cover a frame structure of the body.

Each of the above-mentioned wings 2 includes a horizontal portion 2a which is fixed to both side areas of the body part 1, and a vertical portion 2b which extends upwardly from a side edge of each of the vertical portions 2b. Also, leading edges 2c and 2d are disposed so as to be continuous to each other at a front end, which faces the flight direction, of the horizontal portion 2a and the vertical portion 2b. Among the leading edges 2c and 2d, the leading edge 2c of the horizontal portion 2a is formed by a plurality of the hot structure parts 1x, ... in the same manner as the nose cone 1a.

In the spacecraft according to this embodiment, the oxidation resistant material (oxidation resistant material for spacecraft), in particular, used for each of the above-mentioned hot structure parts 1x, ... is different from that of the prior art.

That is, in this embodiment, one obtained by using a manufacturing method in which a ceramic material including zirconium boride as its main component and a small amount of silicon carbide is molded using a normal pressure sintering method, is adopted as the above-mentioned oxidation resistant material. More specifically, assuming ZrO₂ is 100% in weight ratio as zirconium boride, one in which 2-20% of silicon carbide (SiC) is added thereto is used. Note that the normal pressure sintering method is a kind of sintering method for the ceramic material, in which powdered raw material is molded into the shape of a part in advance and then sintered by increasing heat without applying any pressure. Since there is no need to apply a pressure as in the hot pressing method, this method yields a part having a three dimensional shape which is obtained in a sintered form.

While zirconium boride has a very high melting point of 3,040°C in an inert atmosphere and an excellent anti-corrosion property at high temperatures, an oxidizing phenomenon tends to markedly occur at high temperatures since it is a non-oxide substance. Although the performance of a sintered compact thereof decreases if such an oxidation progresses, it becomes possible, according to the present invention, to reduce the oxidation rate and to form a stable oxide since silicon carbide is contained therein.

Table I shows results in which the above-mentioned properties are confirmed by conducting tests. In Table 1, results are tabulated in which each of a sample of the embodiment (ZrB₂ - 3 wt.% SiC), a sample including only SiC (SiC (bulk)), and a sample with coating (C/C with SiC coating) was heated for about 1,100 seconds so that the surface temperature thereof reached 1,600°C. Note that each of the samples was not simply heated, but was heated using an arc wind tunnel so as to simulate a high speed-high temperature flow on the surface of each sample. As a reference, results obtained by increasing the surface temperature of the sample of the embodiment (ZrB₂ - SiC) to 1,700°C is also shown in the Table.

**Table 1**

| Samples | Surface Temp. (°C) | Weight change (mg) | Thickness change (µm) | Remarks |
|---|---|---|---|---|
| ZrB₂ - SiC | 1,600 | 114.3 | 63 | 150 µm oxidized layer |
| Same as above | 1,700 | 106.9 | 91 | 190 µm oxidized layer |
| SiC (bulk) | 1,600 | -263.2 | -97 | |
| C/C with SiC coating | 1,600 | -558.3 | (-107) | Extensive local damage |

As shown in Table 1, the plate thickness and weight of SiC (bulk) decreased by about 97 µm and 263 mg, respectively, at the sample surface temperature of 1,600°C. Also, as for the sample of C/C with a SiC coating, extensive damage was locally caused and it was significantly worn away as indicated by the weight decrease of 558 mg (although it may not be as significant as local wear, a decrease of 107 µm was confirmed in the plate thickness.)

Unlike the samples which exhibited the above-mentioned wear, the plate thickness and the weight of the sample of the embodiment containing ZrB₂ - SiC increased by 63 µm and about 114 mg, respectively. The increase in the plate thickness and weight was caused by the formation of a thick oxidation layer including ZrO₂ as a main component on the surface of the sample. Since the oxidation layer functions as an anti-oxidation protection layer which reduces the oxidation rate and covers the surface of the sample, it inhibits further progress of oxidation. In this manner, it becomes possible to exhibit a higher heat resistance than the other samples.

As shown in Table 1, decrease in the plate thickness and weight of the sample was not observed when the temperature of the sample was further increased by 100°C so as to be 1,700°C, and it was confirmed that the sample can still exhibit a high heat resistance.

In the body part 1, the temperature of the above-mentioned nose cone 1a and the leading edge 2c tends to be very high compared to the other parts and may reach 1,700°C since they have particularly sharply curved shapes and face the flow of air therearound. Also, since the rate of applied aerodynamic heat q (a quantity of input heat per unit area) increases as the curvature thereof decreases, the curvature could not be decreased, in a conventional manner, over the limit of the oxidation resistance of a material.

On the other hand, according to the embodiment of the present invention, since the oxidation resistant material which can exert sufficient heat resistance even at a level of 1, 700°C is used for the hot structure parts 1x, ..., it becomes possible to realize flexible design, such as decrease in curvature, by decreasing the restriction in designing the body of a spacecraft. Similarly, since the oxidation resistant material itself can withstand high temperatures, it becomes possible to more freely design the flight path.

Hereinafter, effects of the above-mentioned spacecraft, the hot structure parts 1x, ... thereof, the oxidation resistant materials, and the method of production thereof according to embodiments of the present invention will be described.

In the oxidation resistant material of the embodiment of the present invention, a structure and a production method in which a ceramic material including zirconium boride and silicon carbide is molded using a normal pressure sintering method is adopted. In this manner, since the oxidation layer which is formed when an aerodynamic heat is applied, functions as an anti-oxidation protection layer and inhibits further progress of oxidation, it becomes possible to exhibit higher heat resistance than a conventional oxidation resistant material to which a silicon carbide coating is applied.

Also, since the normal pressure sintering method can be applied in the manufacturing process, it becomes possible to readily process the nose cone 1a, the leading edge 2c, etc., into a desired shape at low cost. In this manner, production costs may be reduced, and an oxidation resistant material for spacecraft can be provided at a low price.

Moreover, in the hot structure parts 1x, ... according to the embodiment of the invention, a structure is adopted in which the above-mentioned oxidation resistant material is used. According to this structure, it becomes possible to provide hot structure parts 1x, ... having more acute shape than conventional parts and a sufficient oxidation resistant strength since the oxidation resistant material having a higher oxidation resistance than that of a conventional silicon carbide coating system is adopted and it can be formed into a desired shape.

Note that although the hot structure parts 1x, ... of the present invention are adopted for the nose cone 1a or the leading edge 2c in this embodiment, it is not limited as such and the hot structure parts may be used for the other parts.

### Industrial Applicability

In the oxidation resistant material for spacecraft according to the first embodiment of the present invention, a ceramic material in which silicon carbide is included in zirconium boride is adopted. According to this configuration, since an oxidation layer which is formed when an aerodynamic heat is applied, functions as an anti-oxidation protection layer and suppresses further oxidation process, it becomes possible for it to have a higher heat resistance than a conventional oxidation resistant material onto which a silicon carbide coating is applied.

Also, since a normal pressure sintering method may be applied during the production thereof, it becomes possible to readily produce a nose cone or a leading edge in a desired shape at low cost. Accordingly, it becomes possible to provide an oxidation resistant material for spacecraft at a low price by reducing the manufacturing costs.

Moreover, according to the hot structure part of the second aspect, the oxidation resistant material for spacecraft according to the first aspect is adopted. According to this configuration, it becomes possible to provide hot structure parts having a more acute shape than conventional members and a sufficient oxidation resistant strength since the oxidation resistant material having a higher oxidation resistantance than that of a conventional silicon carbide coating system is used and it can be formed into a desired shape.

Furthermore, according to the hot structure part of the third aspect of the present invention, the hot structure part as set forth in the second aspect is used for a nose cone of a spacecraft. According to this configuration, not only is the heat resistance of the nose cone, which is one of the parts in which the temperature particularly increases during reentry into the atmosphere, but also the manufacturing cost thereof may be reduced to provide it at a low price. In addition, since the oxidation resistant material for spacecraft which is used for the hot structure part has a higher oxidation resistant strength than a conventional material, it becomes possible to produce a nose cone having a more acute shape than a conventional nose cone, and to loosen the restrictions on the shape of the spacecraft body due to the material used.

According to the hot structure part of the fourth embodiment of the present invention, the hot structure part as set forth in the second aspect is used for a leading edge of the above spacecraft. According to this configuration, not only the heat resistance of the leading edge, which is one of the parts in which the temperature particularly increases during reentry into the atmosphere, but also the manufacturing cost thereof may be reduced to provide it at a low price. In addition, since the oxidation resistant material for spacecraft which is used for the hot structure part has a higher heat resistance than a conventional material, it becomes possible to produce a leading edge having a more acute shape than a conventional leading edge, and to loosen the restrictions on the shape of the spacecraft body due to the material used.

Also, according to the spacecraft of the fifth embodiment of the present invention, the hot structure part according to any one of the above-mentioned second to fourth aspects is employed. According to this configuration, since its hot structure parts have a higher heat resistance than that of a conventional member and the hot structure may be formed into a desired shape, it becomes possible to loosen the restrictions on the shape of the body of the spacecraft due to the materials used.

Moreover, according to the method for producing an oxidation resistant material for spacecraft of the sixth embodiment of the present invention, the method includes the steps of mixing silicon carbide in zirconium boride, and molding by means of a normal pressure sintering method. Since the oxidation resistant material for spacecraft produced by this production method produces an oxidation layer which is formed on the surface when an aerodynamic heat is applied, and functions as an anti-oxidation protection layer which suppresses further oxidation process, it becomes possible to possess a higher heat resistance than a conventional oxidation resistant material onto which a silicon carbide coating is applied.

Also, since a normal pressure sintering method may be applied during the production thereof, it becomes possible to readily produce a nose cone or a leading edge in a desired shape at low cost. Accordingly, it becomes possible to provide an oxidation resistant material for spacecraft at a low price by reducing the manufacturing costs.

## Claims

1. A high temperature oxidation resistant material for spacecraft which is used for a hot structure part for spacecraft such as a space shuttle, comprising:
a ceramic material in which silicon carbide is contained in zirconium boride.

2. A hot structure part used for forming a body structure of a spacecraft such as a space shuttle, comprising:
a high temperature oxidation resistant material including a ceramic material in which silicon carbide is contained in zirconium boride.

3. A hot structure part according to claim 2, wherein said hot structure part is used for a nose cone of said spacecraft.

4. A hot structure part according to claim 2, wherein said hot structure part is used for a leading edge of said spacecraft.

5. A spacecraft such as a space shuttle, comprising: a hot structure part according to claim 2.

6. A spacecraft such as a space shuttle, comprising: a hot structure part according to claim 3.

7. A spacecraft such as a space shuttle, comprising: a hot structure part according to claim 4.

8. A method for producing a high temperature oxidation resistant material for spacecraft which is used for a hot structure part for spacecraft such as a space shuttle, comprising the steps of:
mixing silicon carbide in zirconium boride; and
molding an obtained mixture using a normal pressure sintering method.
